# EUROPÄISCHE PATENTSCHRIFT

(11) **EP 0 819 460 B1**
(45) Veröffentlichungstag und Bekanntmachung des Hinweises auf die Patenterteilung: **12.09.2001**
(21) Anmeldenummer: 97111039.0
(22) Anmeldetag: 02.07.1997
(51) Int. Cl.: B01D 46/00, G01N 1/22, G08B 17/10

(54) **Luftfilter**
Air filter
Filtre à air

(30) Priorität: 15.07.1996 DE 19628456
(43) Veröffentlichungstag der Anmeldung: 21.01.1998
(73) Patentinhaber: Wagner Alarm- und Sicherungssysteme GmbH, 30853 Langenhagen (DE)
(72) Erfinder: Gelhoet, Axel, 31558 Hagenburg (DE); Preikszas, Kai-Uwe, 63743 Aschaffenburg (DE)
(74) Vertreter: Rupprecht, Kay, Dipl.-Ing.

(56) Entgegenhaltungen:
- EP-A- 0 324 295
- EP-B- 0 373 045
- DE-A- 3 931 293
- DE-A- 4 427 165

## Beschreibung

Die vorliegende Erfindung betrifft ein Luftfilter zur Verwendung in einer Luftleitung zum Abgriff einer Luftprobe für einen Luftstromsensor aus einem Hauptluftstrom, welcher einem Sensorgehäuse einer Branderkennungsvorrichtung zugeführt wird.

Eine Branderkennungsvorrichtung der hier in Rede stehenden Art dient der Frühesterkennung von Bränden bereits in ihrer Entstehungsphase. Typische Anwendungsbereiche für solche Branderkennungsvorrichtungen sind Räume mit hochwertigen oder wichtigen Einrichtungen, wie z.B. Räume mit EDV-Anlagen in Banken oder dergleichen. Zu diesem Zweck werden der Raumluft der der Gerätekühlluft ständig repräsentative Teilmengen entnommen, die einem in dem Sensorgehäuse angeordneten Sensor zum Erkennen einer Brandkenngröße zugeführt werden.

Ein probates Mittel zum Entnehmen dieser repräsentativen Teilmengen der Raum- oder Gerätekühlluft und zum Zuführen zu dem Sensorgehäuse sind Rohrleitungen, die beispielsweise unter der Raumdecke befestigt sind und zu der Lufteintrittsöffnung in dem Sensorgehäuse der Branderkennungsvorrichtung führen. Hierzu sind die Rohrleitungen mit Ansauglöchern versehen, durch welche ein Gebläse, das in dem Sensorgehäuse untergebracht ist, die Luftteilmengen durch das Rohrleitungssystem einsaugt und dem Sensor zuführt.

Unter dem Begriff "Brandkenngröße" werden physikalische Größen verstanden, die in der Umgebung eines Entstehungsbrandes meßbaren Veränderungen unterliegen, z.B. die Umgebungstemperatur, der Feststoff- oder Flüssigkeits- oder Gasanteil in der Umgebungsluft (Bildung von Rauch-Partikeln oder Rauch-Aerosolen oder Bildung von Dampf), oder die Umgebungsstrahlung.

Eine wichtige Voraussetzung für das Erkennen eines Entstehungsbrandes im frühesten Stadium besteht darin, daß die Branderkennungsvorrichtung ununterbrochen eine ausreichend repräsentative Luftmenge ansaugen und dem Sensor zuführen kann. Es ist also wichtig, daß bei gleichbleibender Saugleistung des Gebläses durch alle Ansaugöffnungen in den Rohrleitungen kontinuierlich eine definierte Luftmasse angesaugt wird, somit in dem Ansaugsystem definierte Strömungsverhältnisse vorliegen. Ein derart funktionierendes Ansaugsystem ist im wesentlichen zwei Störfaktoren ausgesetzt: Zum einen können die Ansaugöffnungen durch Staub-, Schmutz- oder Eisansatz ganz oder teilweise verstopfen, wodurch sich die angesaugte Luftteilmenge wegen des reduzierten Öffnungsquerschnitts verringert. Zum anderen kann ein Bruch in einem der Ansaugrohre zu undefinierten Strömungsverhältnissen im Ansaugsystem führen, da dann durch das betreffende Ansaugrohr zu viel Luft angesaugt wird, und durch andere möglicherweise zu wenig, wodurch die Überwachungsfunktion der gesamten Branderkennungsvorrichtung beeinträchtigt wird bzw. ganz entfällt.

Um das Beibehalten der definierten Strömungsverhältnisse zu überwachen, wird üblicherweise die Strömungsgeschwindigkeit bzw. der Volumenstrom der angesaugten Raum- oder Geräteluft mittels eines Luftstromsensors auf Änderungen überwacht. Hierzu ist es beispielsweise aus der DE 33 31 203 A1 bekannt, einen thermischen Luftstromsensor zu verwenden, bei dem die Abkühlung eines beheizten Sensorelements das Maß für den Luftstrom ist. Diese Abkühlung hängt davon ab, wieviele Luftmoleküle pro Zeiteinheit an dem beheizten Sensorelement vorbeiströmen. Damit ist das Ausgangssignal des thermischen Luftstromsensors ein Maß für den Massenstrom der angesaugten Raum- oder Geräteluft.

Moderne Luftstromsensoren sind in Mikrostrukturtechnik im Handel erhältlich und arbeiten nach dem Prinzip eines Heißfilm-Anemometers und nutzen ebenfalls die Kühlwirkung des über die Oberfläche eines Fühlerelements streichenden Luftstroms. Dabei ändert sich die Ausgangsspannung im gleichen Maße wie der Luftstrom durch die Lufteintrittsöffnung des Sensorgehäuses. Das Gehäuse eines solchen Luftstromsensors besitzt einen Eingangs- und einen Ausgangsanschluß sowie eine interne Luftleitung, um eine Luftprobe, die aus dem Hauptluftstrom abgegriffen wird, genau über die Mikrobrückenstruktur des Luftstromsensors zu leiten. Ein solcher Luftstromsensor ist preiswert erhältlich, zuverlässig und genau, und sein Ausgangssignal ist ohne großen Aufwand weiterverarbeitbar.

Allerdings ist ein derartiger Luftstromsensor in Mikrostrukturtechnik sehr empfindlich gegenüber Verschmutzung, was seinen ansonsten wünschenswerten Einsatz problematisiert. Hier setzt die vorliegende Erfindung an, welche in erster Linie Filtermaßnahmen für einen solchen Luftstromsensor betrifft. Keiner der bekannten, käuflichen Luftfilter konnte die an ihn zu stellenden Anforderungen erfüllen. Diese bestehen zunächst in einer vertretbaren Größe des ins Auge zu fassenden Filters, da die beschränkten Raumverhältnisse in dem Sensorgehäuse zu berücksichtigen sind. Ferner sollte der Luftfilter bei minimalem Luftwiderstand so viele Partikel wie möglich ausfiltern. Schließlich ist die Bereitstellung eines Luftfilters mit den gewünschten Eigenschaften auch eine Preisfrage. Es hat sich gezeigt, daß bekannte Fertigfilter bei vertretbarer Größe und vertretbarem Preis einen zu hohen Luftwiderstand aufweisen, der 70 bis 100% Luftstromverlust mit sich brächte.

Aus der DE-A-44 27 165 ist ein Luftfilterkörper in Form einer Sonde zur Entnahme von Gasproben aus einem Gasstrom bekannt, der eine Kegelspitze aufweist, die gegen die Strömungsrichtung zeigend in dem Gasstrom angeordnet ist, so daß der Gasstrom an der Mantelfläche der Kegelspitze entlang streicht, und der einen quer zur Längsachse des Luftfilterkörpers verlaufenden Strömungskanal mit einer seitlichen Gasansaugöffnung aufweist. Hierbei ist die Gasansaugöffnung am basisseitigen Ende der Kegelspitze in einer Hinterschneidung zurückgesetzt angeordnet, weshalb die dort durch den vorbei strömenden Gasluftstrom erzeugten Verwirbelungen ein Abscheiden von Partikeln aus dem Gasström unterstützen und somit ein weitestgehend partikelfreies Ansaugen einer Gasluftprobe ermöglichen. Aus der EP-A-0 373 045 ist ebenfalls ein solcher Luftfilterkörper mit einer Kegelspitze bekannt, bei dem die Ansaugöffnungen - hier sind es im Gegensatz zu dem Luftfilterkörper gemäß der DE-A-44 27 165 mehrere - ebenfalls an dem basisseitigen Ende der Kegelspitze in einer Hinterschneidung zurückgesetzt angeordnet sind. Beiden bekannten Luftfilterkörpern ist als Nachteil gemeinsam, daß sie zur Verwendung in einer Branderkennungsvorrichtung kaum geeignet sind, da sich an der Hinterschneidung, d.h. an dem basisseitigen Ende der jeweiligen Kegelspitze, Verwirbelungen bilden, die in einer Branderkennungsvorrichtung, bei der es auf das frühestmögliche Detektieren von Brandkenngrößen ankommt, gerade vermieden werden sollen.

Aufgabe der vorliegenden Erfindung ist es, einen Luftfilter, insbesondere für die eingangs genannte Verwendung anzugeben, der sowohl nach Größe, Leistungscharakteristika als auch nach dem Herstellungspreis die an ihn gestellten Anforderungen erfüllt.

Diese Aufgabe wird erfindungsgemäß durch einen Luftfilter der eingangs genannten Art gelöst, der einen Vorfilterkörper mit einer Kegelspitze aufweist, die gegen die Strömungsrichtung zeigend in dem Hauptluftstrom derart angeordnet ist, daß die Hauptluft an der Mantelfläche des Vorfilterkörpers entlang streicht, und der einen T-förmigen Strömungskanal in dem Vorfilterkörper aufweist, dessen Eingangsabschnitt quer zum Hauptluftstrom und quer zur Längsachse des Vorfilterkörpers verläuft, und dessen Ausgang an die zum Luftstromsensor führende Luftleitung angeschlossen ist, wobei die Öffnungen des Eingangsabschnitts dort auf der Mantelfläche angeordnet sind, wo die Hauptluft entlang streicht.

Hierbei entspricht der Hauptluftstrom den vorstehend beschriebenen repräsentativen Teilmengen der Raum- oder Gerätekühlluft, die dem Sensorgehäuse durch die Ansaugrohre zugeleitet werden. Der Abgriff der Luftprobe für den Luftstromsensor erfolgt an der Lufteintrittsöffnung des Sensorgehäuses mittels der Luftleitung, welche mit ihrer Eingangsöffnung an den Ausgang des Vorfilterkörpers angeschlossen ist, der seinerseits im Hauptluftstrom angeordnet ist. An der Lufteintrittsöffnung entsteht ein Druckabfall, der einen bestimmten und ausreichenden Luftstrom durch den T-förmigen Strömungskanal des Vorfilterkörpers und durch den Luftstromsensor bewirkt. Bedingt durch ihre Massenträgheit bewegen sich die auszufilternden Schmutz-, Staub- oder Rauchpartikel geradeaus durch die Lufteintrittsöffnung und werden nicht in den quer zum Hauptluftstrom verlaufenden Eingangsabschnitt des T-förmigen Strömungskanals geleitet, und damit auch nicht in den Luftstromsensor. Da dieser quer zum Hauptluftstrom verlaufende Eingangsabschnitt den Vorfilterkörper vollständig durchdringt, d.h. an zwei Seiten des Vorfilter körpers je eine Eingangsöffnung vorhanden ist, wird ein unerwünschter Saugstrahleffekt durch den an den Eingangsöffnungen vorbeistreichenden Hauptluftstrom vermieden. Der größte Teil der in das Sensorgehäuse eingesaugten Raum- oder Gerätekühlluft streicht somit an dem Vorfilterkörper vorbei, gelangt in das Sensorgehäuse und strömt durch den Sensor, der Rauchaerosole und/oder andere Brandkenngrößen detektiert.

Die Vorteile der vorliegenden Erfindung liegen insbesondere darin, daß die mit dem Luftfilter ausgerüsteten Branderkennungsvorrichtungen auch in staubiger oder verschmutzter Umgebung, z.B. in holz- oder metallbearbeitenden Betrieben, in Umgebungen mit Zementstaub, eingesetzt werden können. Darüber hinaus ist eine beachtliche Erhöhung der Lebensdauer des Luftstromsensors und damit eine vorteilhafte Verlängerung der Wartungsintervalle der damit ausgerüsteten Branderkennungsvorrichtungen erzielbar. Schließlich wird es durch einen Luftfilter überhaupt erst möglich, einen Luftstromsensor in Mikrostrukturtechnik mit den eingangs beschriebenen Vorteilen einzusetzen.

Vorteilhafte Weiterbildungen der Erfindung sind in den Unteransprüchen angegeben.

So ist vorzugsweise eine Lochscheibe in der Lufteintrittsöffnung des Sensorgehäuses vorgesehen, die ein zentrales Durchgangsloch aufweist, in dem der Vorfilterkörper sitzt, und mehrere dezentrale Durchgangslöcher, durch welche der Hauptluftstrom in das Sensorgehäuse strömt. Hierbei kann der Vorfilterkörper beispielsweise eine langgestreckte, zylindrische Form aufweisen, so daß er sich ohne weiteres in ein kreisrundes zentrales Durchgangsloch einfügt.

In Weiterbildung der Lochscheibe ist vorgesehen, daß die dezentralen Durchgangslöcher innerhalb eines Kreises angeordnet sind, dessen Durchmesser dem Innendurchmesser eines Ansaugrohrs entspricht, durch das der Hauptluftstrom dem Sensorgehäuse zugeführt wird. Hierbei mündet das Ansaugrohr in der Lufteintrittsöffnung in das Sensorgehäuse. Durch die beschriebene Anordnung der dezentralen Durchgangslöcher wird ein weitestgehend hindernisfreier Weg der repräsentativen Teilmengen der Raum- oder Gerätekühlluft in das Sensorgehäuse sichergestellt. Die Durchgangslöcher werden außerdem entgratet oder angesenkt, weil sich an scharfen Kanten Verwirbelungen bilden würden.

Darüber hinaus ist vorzugsweise vorgesehen, daß die Stege zwischen den dezentralen Durchgangslöchern abgerundet ausgebildet sind, damit sich dort kein Schmutz ansammeln kann.

Besonders bevorzugterweise sind der Vorfilterkörper und die Lochscheibe einstückig ausgebildet und bestehen beispielsweise aus einem einzigen Kunststoff-Spritzgußteil, das besonders preiswert herstellbar ist. Das der Kegelspitze entgegengesetzte Endstück des Vorfilterkörpers ist für den Anschluß einer schlauchförmigen, zum Luftstromsensor führenden Luftleitung konisch ausgebildet und hat glatte Innenwände, um den Luftwiderstand zu minimieren.

Vorzugsweise ist auch die Lochscheibe im Querschnitt kegelstumpfförmig, d.h. konisch ausgebildet, da sie so ohne weiteres und sicher in eine im Handel erhältliche Anschlußmuffe mit Überwurfmutter und konischer Innenwandung zum Anschluß des Ansaugrohres plan einklebbar ist, so daß beim Einkleben keine Verkantungen der Lochscheibe auftreten, welche sich ungünstig auf den Luftstrommeßwert auswirken.

Vorzugsweise gehört zu dem Luftfilter ein Feinfilter, der in die Luftleitung in Strömungsrichtung hinter dem Vorfilter und vor dem Luftstromsensor eingesetzt ist. Somit liegt ein zweistufiger Filter vor, in welchem dem Vorfilter die Aufgabe zukommt, große Schmutzpartikel wie z.B. Flusen vom Feinfilter fernzuhalten, damit dieser nicht zu schnell verstopft, während der Feinfilter bei minimalem Luftwiderstand so viel Partikel wie möglich ausfiltern soll. Das schlägt sich in einem reduzierten Wartungs- und-Austauschzyklus und damit in niedrigeren Folge- und Betriebskosten nieder.

Dieser Feinfilter weist eine ganze Reihe funktioneller und wirtschaftlicher Vorteile auf. Zum einen hat sich gezeigt, daß mit dieser Form des Feinfiltergehäuses ein extrem niedriger Luftwiderstand sowohl durch das leere Gehäuse als auch durch ein mit einem Filtereinsatz bestücktes Gehäuse erzielbar ist. Ferner läßt sich das Gehäuse preiswert als Spritzgußteil aus zwei gleichen Kunststoffteilen fertigen. Glatte Innenwände tragen dazu bei, daß durch das leere Gehäuse kein meßbarer Luftstromverlust entsteht.

Ferner wirkt sich die erfindungsgemäße Form des Feinfiltergehäuses positiv beim Einsetzen und bei der Halterung eines Filtereinsatzes aus, was nachstehend anhand der Erläuterungen der Weiterbildungen noch dargestellt wird.

Zum Erzielen eines möglichst geringen Luftwiderstands sind ferner die Wahl des Filtermaterials und die Anordnung und Größe der Filterscheibe entscheidend. In Weiterbildung des Feinfilters ist vorzugsweise vorgesehen, daß der Filtereinsatz im Bereich der größten Durchgangsweite des Feinfiltergehäuses angeordnet ist, und daß der Filtereinsatz ein statisch aufgeladenes Vlies enthält. Ein solches Vlies erhält bei der Herstellung eine permanente statische elektrische Ladung, so daß dessen Filterfunktion im wesentlichen auf der elektrostatischen Anziehung der herauszufilternden Partikel besteht.

Mit dem erfindungsgemäßen Feinfilter ist eine hervorragende Filterwirkung erzielbar. Ein scheibenförmiger Filtereinsatz mit einem Durchmesser von 23 mm erzielt in dem doppel-trichterförmigen Feinfiltergehäuse einen Luftstromverlust von nur 2 bis 3%, während 99,9% der Partikel mit einer Größe von mehr als 0,3 *µ*m ausgefiltert werden. Neben der mit einem solchen Vlies erzielbaren hervorragenden Filterwirkung liegt ein weiterer Vorteil darin, daß der Feinfilter aufgrund dieses Vlieses durch einen leichten mechanischen Schlag auf das Gehäuse ohne weiteres reinigbar ist, da die Staubpartikel nur durch die Aufladung an das Vlies gebunden sind. Versuche haben gezeigt, daß eine solche Filterreinigung etwa drei bis fünf Mal durchführbar ist, was zu einer entsprechend längeren Lebensdauer des Filters mit den entsprechenden wirtschaftlichen Vorteilen führt.

In Zusammenhang mit dem Filtereinsatz, der im Bereich der größten Durchgangsweite des Feinfiltergehäuses angeordnet ist, werden weitere Vorteile der Doppel-Trichterform des Feinfiltergehäuses deutlich: Aufgrund der aneinander stoßenden zylindrischen Abschnitte der Trichter im Bereich ihrer größten Öffnungen wird der Filtereinsatz beim Einsetzen automatisch zentriert und abgedichtet, und es sind keine zusätzlichen Halterungen erforderlich, um den Filtereinsatz in dem Filtergehäuse zu befestigen. Daraus ergibt sich ohne weiteres eine preisgünstige Herstellung und ein wartungsfreundlicher Aufbau.

Im folgenden wird ein bevorzugtes Ausführungsbeispiel der Erfindung anhand einer Zeichnung näher erläutert.

Es zeigen:
- Fig. 1: eine Seitenansicht eines aufgeschnittenen Sensorgehäuses mit angeschlossenem Ansaugrohr und eingebautem Vor- und Feinfilter;
- Fig. 2: eine Seitenansicht eines Vorfilter-Bauteils in Form eines Vorfilterkörpers, der in eine Lochscheibe integriert ist;
- Fig. 3: eine Unter-Ansicht des Vorfilter-Bauteils gemäß Fig. 2; und
- Fig. 4: eine Seitenansicht eines Feinfilters.

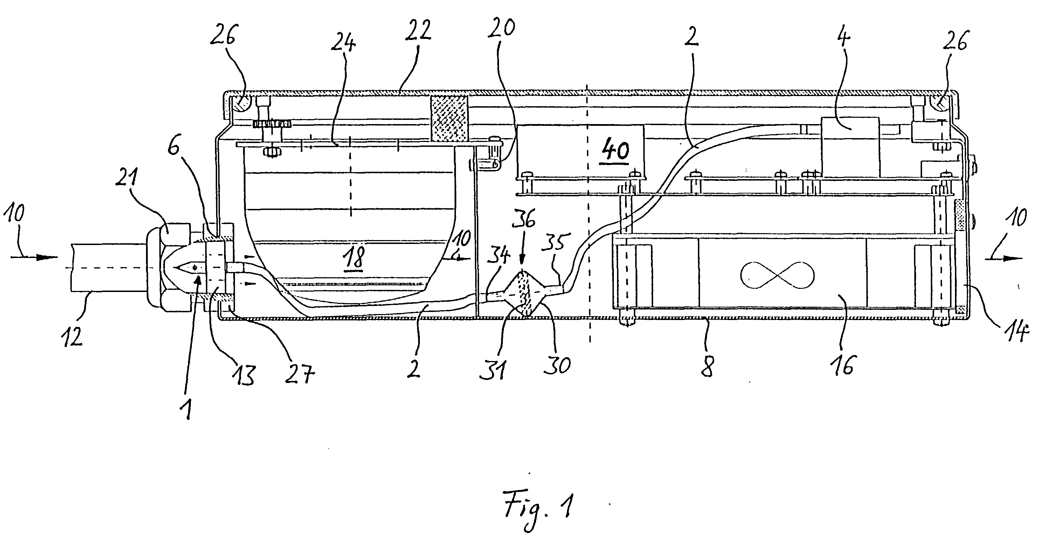

Fig. 1 gewährt eine Seiteneinsicht in ein Sensorgehäuse 8, das im Handel als Branddetektor bezeichnet wird. Dieses Sensorgehäuse 8 ist Teil einer Branderkennungsvorrichtung, die außer dem Sensorgehäuse 8 ein hier nicht dargestelltes Ansaugrohrsystem aufweist, mit dem einem zu überwachenden Raum oder Gerät ständig repräsentative Luftteilmengen entnommen und letztlich über das in Fig. 1 dargestellte Ansaugrohr 12 dem Sensor 18 zugeleitet werden.

Das Sensorgehäuse 8 enthält als in vorliegendem Zusammenhang wesentliche Elemente ein Gebläse 16, mit welchem die repräsentativen Teilmengen einer Raum- oder Geräteluft durch das Ansaugsystem angesaugt werden, einen Sensor 18, der mit seinem unteren Teil in dem Hauptluftstrom 10 angeordnet ist, welcher durch das Ansaugrohr 12 und die Lufteintrittsöffnung 6 in das Sensorgehäuse 8 eintritt, ferner einen Luftstromsensor 4, welcher in nachstehend noch zu beschreibender Weise über eine Luftleitung 2 an einen Vorfilter 1 angeschlossen ist, und eine hier nicht näher interessierende Elektronik-Baugruppe 40 zum Betrieb des Branddetektors. Der Sensor 18 ist hängend an einer Platte 24 befestigt, die ihrerseits mittels eines Gelenks 20 zu Wartungszwecken hochschwenkbar ist. Das Sensorgehäuse 8 ist durch einen Gehäusedeckel 22 verschlossen und durch einen Dichtring 26 abgedichtet. Die durch das Ansaugrohr 12 und die Lufteintrittsöffnung 6 in das Sensorgehäuse 8 eintretende Luft verläßt das Sensorgehäuse am anderen Ende wieder durch eine Luftaustrittsöffnung 14.

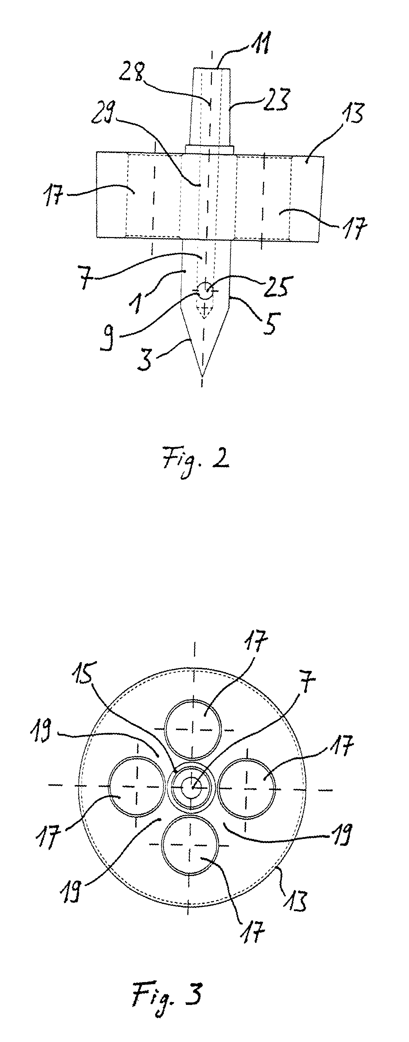

Um den Luftstromsensor 4 vor schädlichen Staub- oder Schmutzpartikeln zu schützen, ist ein zweistufiger Luftfilter mit einem Vorfilter 1 und einem Feinfilter 36 vorgesehen, deren Anordnung ebenfalls der Fig. 1 entnehmbar ist. Der Vorfilterkörper 1, der nachstehend anhand der Fig. 2 und 3 noch näher beschrieben werden wird, ist einstückig mit einer Lochscheibe 13 ausgebildet und sitzt innerhalb einer Anschlußmuffe 27 in der Lufteintrittsöffnung 6 des Sensorgehäuses 8. Mittels der Anschlußmuffe 27 und mittels einer Überwurfmutter 21 wird das Ansaugrohr 12 an dem Sensorgehäuse 8 befestigt.

Fig. 2 zeigt eine Seitenansicht des Vorfilter-Bauteils, welches einstückig aus der Lochscheibe 13 und dem Vorfilterkörper 1 hergestellt ist. Anhand von Fig. 3 ist ersichtlich, daß die Lochscheibe ein zentrales Durchgangsloch 15 und vier dezentrale Durchgangslöcher 17 aufweist, wobei die dezentralen Durchgangslöcher 17 innerhalb eines Kreises angeordnet sind, dessen Durchmesser dem Innendurchmesser des Ansaugrohrs 12 entspricht. Die Stege 19 zwischen den dezentralen Durchgangslöchern 17 sind - was hier nicht ohne weiteres ersichtlich ist - abgerundet ausgebildet, um einer Ansammlung von Schmutz- oder Staubpartikeln entgegenzuwirken.

Anhand Fig. 2 ist ersichtlich, daß der Vorfilterkörper 1 eine langgestreckte zylindrische Form mit einer Mantelfläche 5 und einer Kegelspitze 3 aufweist, welche im eingebauten Zustand gegen die Strömungsrichtung des Hauptluftstroms 10 (vgl. Fig. 1) zeigt. Der Vorfilterkörper 1 weist ferner einen T-förmigen Strömungskanal 7 auf, dessen Eingangsabschnitt 9 quer zum an der Mantelfläche 5 vorbeistreichenden Hauptluftstrom 10 (vgl. Fig. 1) und quer zur Längsachse 28 des Vorfilterkörpers 1 verläuft, und dessen Ausgang 11 an die zum Luftstromsensor 4 führende Luftleitung 2 angeschlossen ist. Hierzu ist das Endstück 23 des Vorfilterkörpers konisch ausgebildet, damit die Luftleitung 2 aufschiebbar ist. Der Eingangsabschnitt 9 des Strömungskanals 7 verläuft quer zum Hauptluftstrom 10 und damit quer zur Längsachse 28 des Vorfilterkörpers 1, so daß größere Schmutz- oder Staubpartikel aufgrund der Massenträgheit geradeaus durch die dezentralen Durchgangslöcher 17 der Lochscheibe 13 in Richtung auf den Sensor 18 bewegt werden, während nur kleinere, feinere Partikel in den Querkanal 25 des Eingangsabschnitts 9 und dann in den Längsabschnitt 29 des Strömungskanals 7 gelangen. Diese feinen Partikel verlassen den Strömungskanal 7 durch den Ausgang 11 und werden durch die Luftleitung 2 zum Feinfilter transportiert.

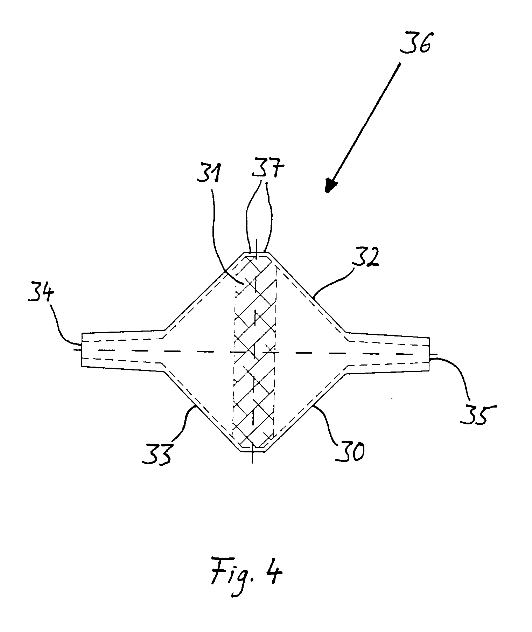

In Fig. 4 ist eine Seitenansicht des Feinfilters 36 dargestellt. Er besteht aus einem Feinfiltergehäuse 30, welches aus zwei trichterförmigen Halbschalen 32, 33 zusammengesetzt ist, und im Bereich seines größten Durchmessers, dort wo die Trichter einen zylindrischen Rand 37 aufweisen, einen Filtereinsatz 31 aufweist. Dieser Feinfilter wird mit seinem Eingang 34 und seinem Ausgang 35 in die Luftleitung 2 eingesetzt, wie dies aus Fig. 1 ersichtlich ist.

## Patentansprüche

1. Luftfilter, zur Verwendung in einer Luftleitung (2) zum Abgriff einer Luftprobe für einen Luftstromsensor (4) aus einem Hauptluftstrom (10), welcher einem Sensorgehäuse (8) einer Branderkennungsvorrichtung zugeführt wird,
**gekennzeichnet durch**
einen Vorfilterkörper (1) mit einer Kegelspitze (3), die gegen die Strömungsrichtung zeigend in dem Haupt luftstrom (10) derart angeordnet ist, daß die Hauptluft an der Mantelfläche (5) des Vorfilterkörpers (1) entlang streicht, und durch einen T-förmigen Strömungskanal (7) in dem Vorfilterkörper (1), dessen Eingangsabschnitt (9) quer zum Hauptluftstrom (10) und quer zur Längsachse (28) des Vorfilterkörpers (1) verläuft, und dessen Ausgang (11) an die zum Luftstromsensor (4) führende Luftleitung (2) angeschlossen ist, wobei die Öffnungen des Eingangsabschnitts (9) dort auf der Mantelfläche (5) angeordnet sind, wo die Hauptluft entlang streicht.

2. Luftfilter nach Anspruch 1,
**gekennzeichnet durch**
eine Lochscheibe (13) in der Lufteintrittsöffnung (6) des Sensorgehäuses (8), die ein zentrales Durchgangsloch (15) aufweist, in dem der Vorfilterkörper (1) sitzt, und mehrere dezentrale Durchgangslöcher (17), durch welche der Hauptluftstrom (10) in das Sensorgehäuse (8) strömt.

3. Luftfilter nach Anspruch 2,
**dadurch gekennzeichnet,**
**daß** die dezentralen Durchgangslöcher (17) innerhalb eines Kreises angeordnet sind, dessen Durchmesser dem Innendurchmesser eines Ansaugrohrs (12) entspricht, durch das der Hauptluftstrom (10) dem Sensorgehäuse (8) zugeführt wird.

4. Luftfilter nach Anspruch 2 oder 3,
**dadurch gekennzeichnet,**
**daß** der Vorfilterkörper (1) und die Lochscheibe (13) einstückig ausgebildet sind.

5. Luftfilter nach einem der Ansprüche 2 bis 4,
**dadurch gekennzeichnet,**
**daß** die Lochscheibe (13) im Querschnitt kegelstumpfförmig ausgebildet ist.

6. Luftfilter nach einem der Ansprüche 2 bis 5,
**dadurch gekennzeichnet,**
**daß** die Stege (19) zwischen den dezentralen Durchgangslöchern (17) abgerundet sind.

7. Luftfilter nach einem der vorstehenden Ansprüche,
**gekennzeichnet durch**
ein Feinfilter (36) mit einem Feinfiltergehäuse (30), das aus zwei trichterförmigen Halbschalen (32, 33) besteht, deren große Öffnungen einander zugewandt und luftdicht miteinander verbunden sind, und das in der Luftleitung (2) in Strömungsrichtung hinter dem Vorfilterkörper (1) angeordnet ist.

8. Luftfilter nach Anspruch 7,
**gekennzeichnet durch**
einen Filtereinsatz (31) im Bereich der größten Durchgangsweite des Feinfiltergehäuses (30).

9. Luftfilter nach Anspruch 8,
**dadurch gekennzeichnet,**
**daß** der Filtereinsatz (31) ein statisch aufgeladenes Vlies enthält.

## Claims

1. Air filter for use in an air duct (2) for tapping an air sample for an air-flow sensor (4) from a main air flow (10), the air sample being fed to a sensor housing (8) of a fire-detecting device, **characterised by** a prefilter body (1) with a conical point (3) arranged in the main air flow (10) so as to point in the opposite direction to the flow direction in such a manner that the main air passes along the lateral surface (5) of the prefilter body (1), and by a T-shaped flow channel (7) in the prefilter body (1), the inlet portion (9) of which extends transversely to the main air flow (10) and transversely to the longitudinal axis (28) of the prefilter body (1) and the outlet (11) of which is connected to the air duct (2) leading to the air-flow sensor (4), the openings of the inlet portion (9) being arranged on the lateral surface (5) along which the main air passes.

2. Air filter according to claim 1, **characterised by** a perforated disc (13) in the air-inlet opening (6) of the sensor housing (8), comprising a central through hole (15) in which the prefilter body (1) is seated and a plurality of peripheral through holes (17) through which the main air flow (10) flows into the sensor housing (8).

3. Air filter according to claim 2, **characterised in that** the peripheral through holes (17) are arranged within a circle the diameter of which corresponds to the inner diameter of an intake pipe (12) through which the main air flow (10) is fed to the sensor housing (8).

4. Air filter according to claim 2 or claim 3, **characterised in that** the prefilter body (1) and the perforated disc (13) are formed in one piece.

5. Air filter according to one of claims 2 to 4, **characterised in that** the perforated disc (13) has a frustoconical cross section.

6. Air filter according to one of claims 2 to 5, **characterised in that** the lands (19) between the peripheral through holes (17) are rounded.

7. Air filter according to one of the preceding claims, **characterised by** a fine filter (36) with a fine-filter housing (30) consisting of two funnel-shaped half shells (32, 33), the large openings of which are directed towards one another and connected together in an airtight manner, and arranged downstream of the prefilter body (1) in the flow direction in the air duct (2).

8. Air filter according to claim 7, **characterised by** a filter element (31) in the region of the largest inside diameter of the fine-filter housing (30).

9. Air filter according to claim 8, **characterised in that** the filter element (31) contains an electrostatically charged non-woven fabric.

## Revendications

1. Filtre à air, à utiliser dans un conduit d'air (2) pour prélever un échantillon d'air destiné à un capteur de courant d'air (4) provenant d'un courant d'air principal (10) qui est acheminé vers un boîtier de capteur (8) d'un dispositif de détection d'incendie, **caractérisé par** un corps de préfiltre (1) avec une pointe conique (3) qui est disposée dans le courant d'air principal (10), dirigée dans le sens contraire au sens d'écoulement, de telle manière que l'air principal passe le long de la surface d'enveloppe (5) du corps de préfiltre (1), et à travers un canal d'écoulement (7) en forme de T dans le corps de préfiltre (1) dont la portion d'entrée (9) s'étend transversalement au courant d'air principal (10) et transversalement à l'axe longitudinal (28) du corps de préfiltre (1), et dont la sortie (11) est raccordée au conduit d'air (2) qui mène au capteur de courant d'air (4), les orifices de la portion d'entrée (9) étant disposés sur la surface d'enveloppe (5) là où passe le courant d'air principal.

2. Filtre à air selon la revendication 1, **caractérisé par** un disque perforé (13) dans l'orifice d'entrée d'air (6) du boîtier de capteur (8), qui présente un trou traversant central (15) dans lequel le corps de préfiltre (1) est placé, ainsi que plusieurs trous traversants (17) excentrés à travers lesquels le courant d'air principal(10) s'écoule dans le boîtier de capteur (8).

3. Filtre à air selon la revendication 2, **caractérisé en ce que** les trous traversants (17) excentrés sont disposés à l'intérieur d'un cercle dont le diamètre correspond au diamètre intérieur d'un tube d'aspiration (12), à travers lequel le courant d'air principal (10) est acheminé vers le boîtier de capteur (8).

4. Filtre à air selon la revendication 2 ou 3, **caractérisé en ce que** le corps de préfiltre (1) et le disque perforé (13) sont réalisés d'une seule pièce.

5. Filtre à air selon l'une des revendications 2 à 4, **caractérisé en ce que** le disque perforé (13) présente une section de forme tronconique.

6. Filtre à air selon l'une des revendications 2 à 5, **caractérisé en ce que** les cloisons (19) entre les trous traversants (17) excentrés sont arrondis.

7. Filtre à air selon l'une des revendications précédentes, **caractérisé par** un filtre fin (36) avec un boîtier de filtre fin (30) qui est constitué de deux demi-coques (32, 33) en forme de cône dont les grandes ouvertures sont tournées les unes vers les autres et sont reliées entre elles de manière étanche à l'air, et qui est disposé dans le conduit d'air (2) derrière le corps de préfiltre (1), dans le sens d'écoulement.

8. Filtre à air selon la revendication 7, **caractérisé par** une garniture de filtre (31) dans la zone de la plus grande ouverture de passage du boîtier de filtre fin (30).

9. Filtre à air selon la revendications 8, **caractérisé en ce que** la garniture de filtre contient un non-tissé à charge statique.
